# EUROPEAN PATENT SPECIFICATION

(11) **EP 3 647 831 B1**
(45) Date of publication and mention of the grant of the patent: **21.02.2024**
(21) Application number: 18825154.0
(22) Date of filing: 28.06.2018
(51) Int. Cl.: G02B 1/14, G02C 7/00, G02B 1/04

(54) **EYEWEAR LENS, COMPOSITION AND METHOD FOR PRODUCING EYEWEAR LENS**
BRILLENGLAS, ZUSAMMENSETZUNG UND VERFAHREN ZUR HERSTELLUNG EINES BRILLENGLASES
LENTILLE OCULAIRE, COMPOSITION ET PROCÉDÉ DE PRODUCTION D'UNE LENTILLE OCULAIRE

(30) Priority: 30.06.2017 JP 2017128644
(43) Date of publication of application: 06.05.2020
(73) Proprietor: Nikon-Essilor Co., Ltd., Tokyo 130-0026 (JP)
(72) Inventor: SAKAI, Koichi, Tokyo 130-0026 (JP)
(74) Representative: Hoffmann Eitle
(86) International application number: PCT/JP2018/024527
(87) International publication number: WO 2019/004337

(56) References cited:
- WO-A1-2017/086272
- JP-A- 2012 087 183
- JP-A- 2013 049 839
- JP-A- 2016 108 347
- JP-A- 2016 199 694
- US-B1- 6 187 444
- US-B2- 7 452 611

## Description

### TECHNICAL FIELD

The disclosure relates to a spectacle lens, a composition, and a spectacle lens manufacturing method.

### BACKGROUND ART

In various fields, a variety of members sometimes have self-healing resin films on their respective surfaces for the purpose of preventing the surfaces from having scratches.

### CITATION LIST

### PATENT LITERATURE

Patent Literature 1: JP 2015-174928 A
Patent Literature 2: US 6 187 444 B1

### SUMMARY OF INVENTION

The present disclosure relates to a spectacle lens comprising: a lens base; and a resin film disposed on at least one of an object side surface and an eyeball side surface of the lens base, wherein the resin film is formed using a composition containing a polyol, a polyisocyanate and an epoxy compound, wherein the polyol comprises a polyacrylic polyol, and wherein a ratio of the number of moles of hydroxyl groups in the polyacrylic polyol to the number of moles of all hydroxyl groups in the polyol is not less than 50%, and wherein the number of epoxy groups in the epoxy compound is two to four.

The present disclosure also relates to a spectacle lens manufacturing method comprising a step of forming a resin film by applying the above composition onto at least one of an object side surface and an eyeball side surface of a lens base to form a coating and curing the coating.

### BRIEF DESCRIPTION OF DRAWINGS

[FIG. 1] FIG. 1 is a cross-sectional view of a spectacle lens of one embodiment.
[FIG. 2] FIG. 2 is a cross-sectional view of a spectacle lens of another embodiment.

### DESCRIPTION OF EMBODIMENTS

A spectacle lens, a composition, and a spectacle lens manufacturing method in the present embodiment are described below in detail.

Note that, in the description, numerical values given before and after "to" are included in the range as the lower and upper limits thereof.

When a spectacle lens is subjected to lens shape machining, a marking point is provided on the spectacle lens using ink and wiped off after the lens shape machining. Accordingly, it is desired for a resin film disposed on a spectacle lens to have not only excellent self-healing properties but also excellent solvent resistance.

The spectacle lens of the embodiment has a resin film with excellent self-healing properties and excellent solvent resistance.

Further, with the composition of the embodiment, a resin film having the above characteristics can be manufactured.

In the following, the composition is first detailed, and then the spectacle lens and a manufacturing method thereof are detailed.

The composition contains a polyol, a polyisocyanate and an epoxy compound. In the following, components contained in the composition are described in detail.

### <Polyol>

A polyol is a compound having two or more hydroxyl groups in the molecule.

A polyacrylic polyol is contained as a polyol.

The polyacrylic polyol is a polymer including a repeating unit derived from a monomer selected from the group consisting of acrylic acid, methacrylic acid, and their esters (which repeating unit is hereinafter also called "acrylic unit"), and further including a hydroxyl group.

Examples of a monomer that may become a repeating unit having a hydroxyl group contained in the polymer include hydroxyethyl acrylate, hydroxyethyl methacrylate, hydroxypropyl acrylate, hydroxypropyl methacrylate, 3-chloro-2-hydroxypropyl acrylate, and 3-chloro-2-hydroxypropyl methacrylate.

Examples of a monomer that may become the acrylic unit include methyl (meth)acrylate, ethyl (meth)acrylate, propyl (meth)acrylate, isopropyl (meth)acrylate, butyl (meth)acrylate, isobutyl (meth)acrylate, tert-butyl (meth)acrylate, lauryl (meth)acrylate, stearyl (meth)acrylate, 2-ethylhexyl (meth)acrylate, cyclohexyl (meth)acrylate, methylcyclohexyl (meth)acrylate, cyclododecyl (meth)acrylate, and isobornyl (meth)acrylate.

The above polymer may include another repeating unit in addition to the acrylic unit. Examples of a monomer that may become such another repeating unit include styrene, α-methylstyrene, vinyltoluene, acrylamide, methacrylamide, vinyl acetate, and maleic anhydride.

The hydroxyl value of the polyacrylic polyol is not particularly limited and is preferably 10 to 200 mg KOH/g and more preferably 30 to 150 mg KOH/g.

The viscosity of the polyacrylic polyol is not particularly limited and is preferably 1,000 to 10,000 mPa•s and more preferably 1,500 to 5,000 mPa•s.

The viscosity above is measured at 23°C.

Commercial products may be used for the polyacrylic polyol. For example, Desmophen A 870 manufactured by Sumika Bayer Urethane Co., Ltd., Acrydic A-series manufactured by DIC Corporation, and the like are usable.

The ratio of the number of moles of hydroxyl groups in the polyacrylic polyol to the total number of moles of all hydroxyl groups in the polyol is not less than 50%. In other words, the ratio of the polyacrylic polyol to the polyol is not less than 50% on the basis of the molar amount of hydroxyl groups. In particular, the ratio is preferably not less than 60% and more preferably not less than 70% because the resulting resin film can have further excellent solvent resistance. The upper limit thereof is not particularly limited and may be 100%.

The polyol may comprise another polyol in addition to the polyacrylic polyol.

Examples of another polyol include: low-molecule type polyhydric alcohols such as ethylene glycol, diethylene glycol, propylene glycol, dipropylene glycol, 1,4-butanediol, 1,6-hexanediol, neopentyl glycol, triethylene glycol, glycerol, pentaerythritol, trimethylolpropane, and trimethylolethane; and high-molecule type polyols such as polyether polyol, polyester polyol, polyether ester polyol, polyalkylene polyol, polycarbonate polyol, polycaprolactone polyol, and polyurethane polyol, as well as polycarbonate-modified polyol, polyene-modified polyol, caprolactonemodified polyol, and bisphenol-modified polyol as obtained by modifying the above polyols.

The molecular weight of the another polyol and the number of hydroxyl groups therein are not particularly limited, and the respective optimal values are selected as appropriate such that the ratio of the number of moles of hydroxyl groups in the polyacrylic polyol falls within the foregoing range.

One preferred embodiment of the another polyol is a polycarbonate-modified polyester polyol.

### <Polyisocyanate>

A polyisocyanate is a compound having two or more isocyanate groups in the molecule. The polyisocyanate and the polyol react with each other to produce a polyurethane.

The polyisocyanate is not particularly limited in type, and examples thereof include: aromatic polyisocyanates such as polymethylene polyphenyl polyisocyanate, diphenylmethane diisocyanate, polymeric diphenylmethane diisocyanate, carbodiimide-modified diphenylmethane diisocyanate isocyanate, phenylene diisocyanate, tolylene diisocyanate, and naphthalene diisocyanate; and aliphatic or alicyclic polyisocyanates such as hexamethylene diisocyanate, lysine diisocyanate, cyclohexane diisocyanate, isophorone diisocyanate, dicyclohexylmethane diisocyanate, xylylene diisocyanate, and tetramethyl xylylene diisocyanate. Of these, aliphatic or alicyclic polyisocyanates of so-called non-yellowing type are preferred.

Polyisocyanates may be used singly or in combination of two or more.

For the polyisocyanate, it is preferable to use a blocked polyisocyanate with its isocyanate groups being blocked (or sealed) with a blocking agent.

The blocking agent is not particularly limited in type, and examples thereof include pyrazole derivatives, methyl ethyl ketoxime, amines, and active methylenes.

### <Epoxy Compound>

An epoxy compound is a compound having an epoxy group. The epoxy compound contributes mainly to improvement in solvent resistance of the resulting resin film.

The epoxy group refers to a group having a ring structure composed of two carbon atoms and one oxygen atom, as shown below. * denotes a bonding position.

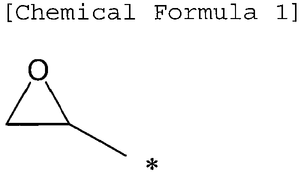

The molecular weight of the epoxy compound is not particularly limited and may be not more than 1,000, and because the resulting resin film can have further excellent solvent resistance, is preferably not more than 500. The lower limit thereof is not particularly limited and may be not less than 100.

The number of epoxy groups in the epoxy compound is two to four.

The epoxy compound is not particularly limited in type, and examples thereof include: aliphatic epoxy compounds such as ethylene glycol diglycidyl ether, polyethylene glycol diglycidyl ether, propylene glycol diglycidyl ether, polypropylene glycol diglycidyl ether, butanediol diglycidyl ether, neopentyl glycol diglycidyl ether, hexanediol diglycidyl ether, glycerin diglycidyl ether, trimethylolpropane triglycidyl ether, diglycerin tetraglycidyl ether, glycerol diglycidyl ether, and glycerol triglycidyl ether; and aromatic epoxy compounds such as bisphenol A type epoxy resin, bisphenol F type epoxy resin, bisphenol S type epoxy resin, ortho-phthalic acid diglycidyl ether, phenol novolac polyglycidyl ether, and cresol novolac polyglycidyl ether.

### <Other Components>

The composition may contain, in addition to the foregoing components, various additives such as a solvent, an ionic compound, a surfactant, a deblocking catalyst, a curing catalyst, a light stabilizer, a UV absorber, an antioxidant, a discoloration preventing agent, and a dye.

Examples of the solvent include organic solvents.

The organic solvent is not particularly limited in type, and examples thereof include: ketone solvents such as acetone, methyl ethyl ketone, cyclohexanone, 2-heptanone and 3-heptanone; ether solvents such as diethyl ether, tetrahydrofuran and ethylene glycol dimethyl ether; ester solvents such as methyl acetate, butyl acetate, benzyl benzoate, dimethyl carbonate, ethylene carbonate, γ-butyrolactone and caprolactone; hydrocarbon solvents such as benzene, toluene, ethylbenzene and tetralin; halogenated hydrocarbon solvents such as dichloromethane, trichloroethane and chlorobenzene; amide or cyclic amide solvents such as N,N-dimethylformamide, N,N-dimethylacetamide and N-methylpyrrolidone (N-methyl-2-pyrrolidone); sulfone solvents such as dimethyl sulfone; and sulfoxide solvents such as dimethyl sulfoxide.

The organic solvent may contain water therein.

The ionic compound (ionic liquid) is a "salt" that is present in liquid form even at or around normal temperature. The ionic compound generally remains in liquid form even in the temperature range of -30°C to +300°C and has an extremely low vapor pressure. The ionic compound is generally non-volatile and has a low viscosity.

Exemplary cations of the ionic compound include ammonium ions such as imidazolium salts and pyridinium salts, phosphonium ions, and Li ions. Exemplary anions include halide ions such as triflate (SO₃CF₃-), phosphorous ions such as hexafluorophosphate (PF₆-), and boron ions such as tetraphenylborate.

Exemplary surfactants include silicone surfactants, fluorosurfactants, and vinyl surfactants.

Exemplary deblocking catalysts (blocked isocyanate dissociation catalysts) include dibutyltin dilaurate, dioctyltin dilaurate, zinc(II) diacetate, zinc(II) dioctoate, and zirconium acetylacetonate.

### <Composition>

The composition contains various components described above.

The method of manufacturing the composition is not particularly limited; for example, the foregoing components may be mixed at one time or in separate steps.

The order of adding the components and the mixing conditions are not particularly limited.

One exemplary method is mixing the polyol, the polyisocyanate, the epoxy compound and other necessary components at one time.

The polyacrylic polyol content of the composition is not particularly limited, and is preferably 1 to 40 mass% and more preferably 15 to 35 mass% based on the total solids (resin film constituents) of the composition because the resulting resin film can have more excellent solvent resistance and self-healing properties.

The total solids (primer layer constituents) refer to components that constitute the resin film. The polyol, the polyisocyanate, the epoxy compound and the like described above correspond to the total solids, while the solvent is not included in the total solids.

The polyisocyanate content of the composition is not particularly limited, and is preferably 1 to 60 mass% and more preferably 40 to 55 mass% based on the total solids of the composition because the resulting resin film can have more excellent solvent resistance and self-healing properties.

The epoxy compound content of the composition is not particularly limited, and is preferably 0.05 to 20 mass% and more preferably 5 to 15 mass% based on the total solids of the composition because the resulting resin film can have more excellent solvent resistance and self-healing properties.

The amount (weight ratio) of the epoxy compound with respect to the total weight of the polyol and the polyisocyanate is not particularly limited, and is preferably more than 1 mass% but not more than 20 mass% and more preferably 5 to 15 mass% because the resulting resin film can have more excellent solvent resistance.

The solvent content of the composition is not particularly limited, and is preferably 30 to 80 mass% and more preferably 40 to 70 mass% based on the total weight of the composition for the sake of handleability of the composition.

The composition as above is a composition for forming a resin film on a lens base.

### <Spectacle Lens>

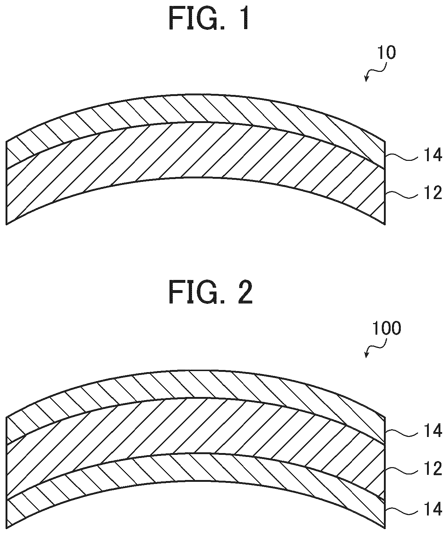

FIG. 1 is a cross-sectional view of a spectacle lens of one embodiment.

A spectacle lens 10 shown in FIG. 1 includes a lens base 12 and a resin film 14 disposed on one side of the lens base 12. In a worn state, the convex of the lens base 12 is an object side surface, and the concave thereof is an eyeball side surface.

While in FIG. 1, the resin film 14 is disposed only on the object side surface of the lens base 12, the invention is not limited to this example, and the resin film 14 may be disposed only on the eyeball side surface, or alternatively, as in a spectacle lens 100 shown in FIG. 2, the resin film 14 may be disposed on each surface of the lens base 12.

Members included in the spectacle lens 10 are described below in detail.

### (Lens Base)

A lens base is a member on which a resin film is formed.

The lens base is not particularly limited in type, and examples thereof include a lens base made of plastic and a lens base made of inorganic glass, with a plastic lens base being preferred because it is lightweight and hard to break and also dyeing is possible.

The material of the plastic lens base is not particularly limited, and examples thereof include acrylic resin, thiourethane resin, methacrylic resin, allyl resin, episulfide resin, polycarbonate resin, polyurethane resin, polyester resin, polystyrene resin, polyethersulfone resin, poly-4-methylpentene-1 resin, diethylene glycol bis(allyl carbonate) resin (CR-39), polyvinyl chloride resin, halogen-containing copolymers, and sulfur-containing copolymers.

The thickness of the lens base is not particularly limited; for instance, the center thickness of a minus lens may be about 1 to about 2 mm for the sake of light weight.

The lens base need not be transparent as long as it is translucent, and may be colored.

The lens base 12 typically has a meniscus shape with its object side surface being the convex and its eyeball side surface being the concave, but this is not the only possible shape.

### (Resin Film)

A resin film is a film disposed on the lens base and has excellent self-healing properties and excellent solvent resistance.

The resin film is a film formed using the foregoing composition. In other words, the resin film contains a polyurethane produced upon reaction between the polyol and the polyisocyanate.

The thickness of the resin film is preferably 5 to 30 um and more preferably 10 to 20 um because this leads to more excellent self-healing properties.

The film thickness is determined by measuring the thickness of the resin film at given five points and calculating the arithmetic mean of the measurements.

A method of manufacturing a spectacle lens including the above resin film is not particularly limited, and preferably contains a step of forming the resin film by applying the composition onto at least one of the object side surface and the eyeball side surface of the lens base to form a coating and curing the coating.

The procedure of this step is described in detail below.

The method of applying the composition onto the lens base is not particularly limited, and examples thereof include dip coating and spin coating. Of these, dip coating is preferred for the sake of productivity.

Various pretreatments may optionally be performed on the surface(s) of the lens base before application of the composition onto the lens base. Exemplary pretreatments include degreasing treatment using an organic solvent, chemical treatment using a basic aqueous solution or an acidic aqueous solution, polishing treatment using an abrasive, plasma treatment, corona discharge treatment, flame treatment, and UV ozone treatment.

After the composition is applied onto the lens base to form a coating, curing treatment for curing the coating may be carried out. One exemplary method of curing treatment is heating the coating. The solvent may be removed from the coating at heating. The heating temperature is not particularly limited and is preferably 25°C to 150°C and more preferably 50°C to 140°C for the purpose of preventing deformation and discoloring of the lens base that may be caused by heating. The heating time is not particularly limited and is preferably from 1 minute to 3 hours.

### (Other Layers)

The spectacle lens in this embodiment may include another layer in addition to the resin film.

For instance, the spectacle lens may have an antireflective layer on the resin film. Exemplary methods for forming the antireflective layer on the surface of the resin film include a method involving bringing an antireflective layer-forming composition containing hollow silica into contact with the surface of the resin film to thereby form a coating, and a method involving bringing an antireflective layer-forming composition containing a fluorine compound into contact with the surface of the resin film to thereby form a coating.

The spectacle lens may have a water and oil repellent layer at its outermost layer for the purpose of improving water and oil repellency. The water and oil repellent layer decreases surface energy of the spectacle lens and thus provides a contamination preventing function to the spectacle lens. In addition, the water and oil repellent layer improves sliding properties of the surface of the spectacle lens and thereby improves abrasion resistance of the spectacle lens.

### EXAMPLES

The spectacle lens and the composition are described below in further detail by way of examples and comparative examples; however, the invention should not be construed as being limited to the following examples.

### <Example 1>

A solution was obtained by mixing polyacrylic polyol (manufactured by Sumika Bayer Urethane Co., Ltd.; Desmophen A 870 BA; hydroxyl value: 98 mg KOH/g; viscosity: 3500 mPa•s (measured at 23°C); solid content: 70 mass%) (10.9 parts by weight), polycarbonate-modified polyester polyol (manufactured by Sumika Bayer Urethane Co., Ltd.; Desmophen C 1100; hydroxyl value: 112 mg KOH/g; solid content: 100 mass%) (4.1 parts by weight) which is a polyol provided in addition to the polyacrylic polyol, polyisocyanate (manufactured by Sumika Bayer Urethane Co., Ltd.; blocked hexamethylene diisocyanate (with a blocking agent being a pyrazole derivative); Desmodur BL 3575/1; solid content: 75 mass%) (20.8 parts by weight), an epoxy compound (manufactured by Nagase ChemteX Corporation; di- and tri-functional aliphatic epoxy compounds; Denacol EX-313; molecular weight: 204; solid content: 100 mass%) (3.6 parts by weight), and butyl acetate (59.6 parts by weight), and the solution was mixed with a surfactant (manufactured by 3M; FC-4432) (0.2 parts by weight), a deblocking catalyst (manufactured by Tokyo Chemical Industry Co., Ltd.; dibutyltin dilaurate) (0.2 parts by weight), and an ionic compound (manufactured by Koei Chemical Co., Ltd.; IL-M22) (0.5 parts by weight) to thereby prepare a composition.

The prepared composition was applied onto a poly(diethylene glycol bis(allyl carbonate)) (CR-39) base (corresponding to a lens base) by dipping to thereby form a coating. Then, the coating was cured by heating at 130°C for 1 hour to thereby form a resin film with a thickness of 12 µm. Thus, a spectacle lens was obtained.

### <Example 2>

A solution was obtained by mixing polyacrylic polyol (manufactured by Sumika Bayer Urethane Co., Ltd.; Desmophen A 870 BA; hydroxyl value: 98 mg KOH/g; viscosity: 3500 mPa•s (measured at 23°C); solid content: 70 mass%) (10.9 parts by weight), polycarbonate-modified polyester polyol (manufactured by Sumika Bayer Urethane Co., Ltd.; Desmophen C 1100; hydroxyl value: 112 mg KOH/g; solid content: 100 mass%) (4.1 parts by weight) which is a polyol provided in addition to the polyacrylic polyol, polyisocyanate (manufactured by Sumika Bayer Urethane Co., Ltd.; blocked hexamethylene diisocyanate (with a blocking agent being a pyrazole derivative); Desmodur BL 3575/1; solid content: 75 mass%) (20.8 parts by weight), an epoxy compound (manufactured by Nagase ChemteX Corporation; di-functional aliphatic epoxy compound; Denacol EX-830; molecular weight: 526; solid content: 100 mass%) (3.6 parts by weight), and butyl acetate (59.6 parts by weight), and the solution was mixed with a surfactant (manufactured by 3M; FC-4432) (0.2 parts by weight), a deblocking catalyst (manufactured by Tokyo Chemical Industry Co., Ltd.; dibutyltin dilaurate) (0.2 parts by weight), and an ionic compound (manufactured by Koei Chemical Co., Ltd.; IL-M22) (0.5 parts by weight) to thereby prepare a composition.

The prepared composition was applied onto a poly(diethylene glycol bis(allyl carbonate)) (CR-39) base (corresponding to a lens base) by dipping to thereby form a coating. Then, the coating was cured by heating at 130°C for 1 hour to thereby form a resin film with a thickness of 14 µm. Thus, a spectacle lens was obtained.

### <Reference example 3>

A solution was obtained by mixing polyacrylic polyol (manufactured by Sumika Bayer Urethane Co., Ltd.; Desmophen A 870 BA; hydroxyl value: 98 mg KOH/g; viscosity: 3500 mPa•s (measured at 23°C); solid content: 70 mass%) (10.9 parts by weight), polycarbonate-modified polyester polyol (manufactured by Sumika Bayer Urethane Co., Ltd.; Desmophen C 1100; hydroxyl value: 112 mg KOH/g; solid content: 100 mass%) (4.1 parts by weight) which is a polyol provided in addition to the polyacrylic polyol, polyisocyanate (manufactured by Sumika Bayer Urethane Co., Ltd.; blocked hexamethylene diisocyanate (with a blocking agent being a pyrazole derivative); Desmodur BL 3575/1; solid content: 75 mass%) (20.8 parts by weight), an epoxy compound (manufactured by Nagase ChemteX Corporation; monofunctional aliphatic epoxy compound; Denacol EX-121; molecular weight: 186; solid content: 100 mass%) (3.6 parts by weight), and butyl acetate (59.6 parts by weight), and the solution was mixed with a surfactant (manufactured by 3M; FC-4432) (0.2 parts by weight), a deblocking catalyst (manufactured by Tokyo Chemical Industry Co., Ltd.; dibutyltin dilaurate) (0.2 parts by weight), and an ionic compound (manufactured by Koei Chemical Co., Ltd.; IL-M22) (0.5 parts by weight) to thereby prepare a composition.

The prepared composition was applied onto a poly(diethylene glycol bis(allyl carbonate)) (CR-39) base (corresponding to a lens base) by dipping to thereby form a coating. Then, the coating was cured by heating at 130°C for 1 hour to thereby form a resin film with a thickness of 14 µm. Thus, a spectacle lens was obtained.

### <Example 4>

A solution was obtained by mixing polyacrylic polyol (manufactured by Sumika Bayer Urethane Co., Ltd.; Desmophen A 870 BA; hydroxyl value: 98 mg KOH/g; viscosity: 3500 mPa•s (measured at 23°C); solid content: 70 mass%) (10.9 parts by weight), polycarbonate-modified polyester polyol (manufactured by Sumika Bayer Urethane Co., Ltd.; Desmophen C 1100; hydroxyl value: 112 mg KOH/g; solid content: 100 mass%) (4.1 parts by weight) which is a polyol provided in addition to the polyacrylic polyol, polyisocyanate (manufactured by Sumika Bayer Urethane Co., Ltd.; blocked hexamethylene diisocyanate (with a blocking agent being a pyrazole derivative); Desmodur BL 3575/1; solid content: 75 mass%) (20.8 parts by weight), an epoxy compound (manufactured by Nagase ChemteX Corporation; di- and tri-functional aliphatic epoxy compounds; Denacol EX-313; molecular weight: 204; solid content: 100 mass%) (0.3 parts by weight), and butyl acetate (64.0 parts by weight), and the solution was mixed with a surfactant (manufactured by 3M; FC-4432) (0.2 parts by weight), a deblocking catalyst (manufactured by Tokyo Chemical Industry Co., Ltd.; dibutyltin dilaurate) (0.2 parts by weight), and an ionic compound (manufactured by Koei Chemical Co., Ltd.; IL-M22) (0.5 parts by weight) to thereby prepare a composition.

The prepared composition was applied onto a poly(diethylene glycol bis(allyl carbonate)) (CR-39) base (corresponding to a lens base) by dipping to thereby form a coating. Then, the coating was cured by heating at 130°C for 1 hour to thereby form a resin film with a thickness of 13 um. Thus, a spectacle lens was obtained.

### <Example 5>

A solution was obtained by mixing polyacrylic polyol (manufactured by Sumika Bayer Urethane Co., Ltd.; Desmophen A 870 BA; hydroxyl value: 98 mg KOH/g; viscosity: 3500 mPa•s (measured at 23°C); solid content: 70 mass%) (8.0 parts by weight), polycarbonate-modified polyester polyol (manufactured by Sumika Bayer Urethane Co., Ltd.; Desmophen C 1100; hydroxyl value: 112 mg KOH/g; solid content: 100 mass%) (7.0 parts by weight) which is a polyol provided in addition to the polyacrylic polyol, polyisocyanate (manufactured by Sumika Bayer Urethane Co., Ltd.; blocked hexamethylene diisocyanate (with a blocking agent being a pyrazole derivative); Desmodur BL 3575/1; solid content: 75 mass%) (20.3 parts by weight), an epoxy compound (manufactured by Nagase ChemteX Corporation; di- and tri-functional aliphatic epoxy compounds; Denacol EX-313; molecular weight: 204; solid content: 100 mass%) (3.6 parts by weight), and butyl acetate (60.1 parts by weight), and the solution was mixed with a surfactant (manufactured by 3M; FC-4432) (0.2 parts by weight), a deblocking catalyst (manufactured by Tokyo Chemical Industry Co., Ltd.; dibutyltin dilaurate) (0.2 parts by weight), and an ionic compound (manufactured by Koei Chemical Co., Ltd.; IL-M22) (0.5 parts by weight) to thereby prepare a composition.

The prepared composition was applied onto a poly(diethylene glycol bis(allyl carbonate)) (CR-39) base (corresponding to a lens base) by dipping to thereby form a coating. Then, the coating was cured by heating at 130°C for 1 hour to thereby form a resin film with a thickness of 13 um. Thus, a spectacle lens was obtained.

### <Example 6>

A solution was obtained by mixing polyacrylic polyol (manufactured by Sumika Bayer Urethane Co., Ltd.; Desmophen A 870 BA; hydroxyl value: 98 mg KOH/g; viscosity: 3500 mPa•s (measured at 23°C); solid content: 70 mass%) (15.0 parts by weight), polyisocyanate (manufactured by Sumika Bayer Urethane Co., Ltd.; blocked hexamethylene diisocyanate (with a blocking agent being a pyrazole derivative); Desmodur BL 3575/1; solid content: 75 mass%) (21.6 parts by weight), an epoxy compound (manufactured by Nagase ChemteX Corporation; di- and tri-functional aliphatic epoxy compounds; Denacol EX-313; molecular weight: 204; solid content: 100 mass%) (3.6 parts by weight), and butyl acetate (58.8 parts by weight), and the solution was mixed with a surfactant (manufactured by 3M; FC-4432) (0.2 parts by weight), a deblocking catalyst (manufactured by Tokyo Chemical Industry Co., Ltd.; dibutyltin dilaurate) (0.2 parts by weight), and an ionic compound (manufactured by Koei Chemical Co., Ltd.; IL-M22) (0.5 parts by weight) to thereby prepare a composition.

The prepared composition was applied onto a poly(diethylene glycol bis(allyl carbonate)) (CR-39) base (corresponding to a lens base) by dipping to thereby form a coating. Then, the coating was cured by heating at 130°C for 1 hour to thereby form a resin film with a thickness of 11 µm. Thus, a spectacle lens was obtained.

### <Comparative Example 1>

A solution was obtained by mixing polyester polyol (manufactured by Daicel Corporation; Placcel 305; hydroxyl value: 305 mg KOH/g; solid content: 100 mass%) (11.3 parts by weight), polyisocyanate (manufactured by Sumika Bayer Urethane Co., Ltd.; blocked hexamethylene diisocyanate (with a blocking agent being a pyrazole derivative); Desmodur BL 3575/1; solid content: 75 mass%) (24.7 parts by weight), an epoxy compound (manufactured by Nagase ChemteX Corporation; di- and tri-functional aliphatic epoxy compounds; Denacol EX-313; molecular weight: 204; solid content: 100 mass%) (3.6 parts by weight), and butyl acetate (59.5 parts by weight), and the solution was mixed with a surfactant (manufactured by 3M; FC-4432) (0.2 parts by weight), a deblocking catalyst (manufactured by Tokyo Chemical Industry Co., Ltd.; dibutyltin dilaurate) (0.2 parts by weight), and an ionic compound (manufactured by Koei Chemical Co., Ltd.; IL-M22) (0.5 parts by weight) to thereby prepare a composition.

The prepared composition was applied onto a poly(diethylene glycol bis(allyl carbonate)) (CR-39) base (corresponding to a lens base) by dipping to thereby form a coating. Then, the coating was cured by heating at 130°C for 1 hour to thereby form a resin film with a thickness of 11 um. Thus, a spectacle lens was obtained.

### <Comparative Example 2>

A solution was obtained by mixing polyacrylic polyol (manufactured by Sumika Bayer Urethane Co., Ltd.; Desmophen A 870 BA; hydroxyl value: 98 mg KOH/g; viscosity: 3500 mPa•s (measured at 23°C); solid content: 70 mass%) (7.2 parts by weight), polycarbonate-modified polyester polyol (manufactured by Sumika Bayer Urethane Co., Ltd.; Desmophen C 1100; hydroxyl value: 112 mg KOH/g; solid content: 100 mass%) (7.8 parts by weight) which is a polyol provided in addition to the polyacrylic polyol, polyisocyanate (manufactured by Sumika Bayer Urethane Co., Ltd.; blocked hexamethylene diisocyanate (with a blocking agent being a pyrazole derivative); Desmodur BL 3575/1; solid content: 75 mass%) (20.1 parts by weight), an epoxy compound (manufactured by Nagase ChemteX Corporation; di- and tri-functional aliphatic epoxy compounds; Denacol EX-313; molecular weight: 204; solid content: 100 mass%) (3.5 parts by weight), and butyl acetate (60.5 parts by weight), and the solution was mixed with a surfactant (manufactured by 3M; FC-4432) (0.2 parts by weight), a deblocking catalyst (manufactured by Tokyo Chemical Industry Co., Ltd.; dibutyltin dilaurate) (0.2 parts by weight), and an ionic compound (manufactured by Koei Chemical Co., Ltd.; IL-M22) (0.5 parts by weight) to thereby prepare a composition.

The prepared composition was applied onto a poly(diethylene glycol bis(allyl carbonate)) (CR-39) base (corresponding to a lens base) by dipping to thereby form a coating. Then, the coating was cured by heating at 130°C for 1 hour to thereby form a resin film with a thickness of 12 um. Thus, a spectacle lens was obtained.

### <Comparative Example 3>

A solution was obtained by mixing polyacrylic polyol (manufactured by Sumika Bayer Urethane Co., Ltd.; Desmophen A 870 BA; hydroxyl value: 98 mg KOH/g; viscosity: 3500 mPa•s (measured at 23°C); solid content: 70 mass%) (10.9 parts by weight), polycarbonate-modified polyester polyol (manufactured by Sumika Bayer Urethane Co., Ltd.; Desmophen C 1100; hydroxyl value: 112 mg KOH/g; solid content: 100 mass%) (4.1 parts by weight) which is a polyol provided in addition to the polyacrylic polyol, polyisocyanate (manufactured by Sumika Bayer Urethane Co., Ltd.; blocked hexamethylene diisocyanate (with a blocking agent being a pyrazole derivative); Desmodur BL 3575/1; solid content: 75 mass%) (20.8 parts by weight), and butyl acetate (63.2 parts by weight), and the solution was mixed with a surfactant (manufactured by 3M; FC-4432) (0.2 parts by weight), a deblocking catalyst (manufactured by Tokyo Chemical Industry Co., Ltd.; dibutyltin dilaurate) (0.2 parts by weight), and an ionic compound (manufactured by Koei Chemical Co., Ltd.; IL-M22) (0.5 parts by weight) to thereby prepare a composition.

The prepared composition was applied onto a poly(diethylene glycol bis(allyl carbonate)) (CR-39) base (corresponding to a lens base) by dipping to thereby form a coating. Then, the coating was cured by heating at 130°C for 1 hour to thereby form a resin film with a thickness of 13 µm. Thus, a spectacle lens was obtained.

With the spectacle lenses of Examples and Comparative Examples obtained above, the evaluations below were conducted.

### (Evaluation of Solvent Resistance)

Ink marking points were given on each of the resin films of the spectacle lenses of Examples and Comparative Examples at the optical center and on both the right and left sides of the optical center by means of a lensmeter, and 10 minutes later, the ink marking points were wiped off with KimWipe. The degree of swelling of the resin film in places where the ink marking points had been wiped off were observed visually and with a microscope. The evaluation criteria are as follows:
Excellent: Swelling of the resin film disappears within 3 days.
Good: It takes more than 3 days but not more than 1 week before swelling of the resin film disappears.
Poor: It takes more than 1 week before swelling of the resin film disappears, or swelling of the resin film does not disappear.

### (Evaluation of Self-healing Properties)

Each of the resin films of the spectacle lenses of Examples and Comparative Examples was, while being applied with a 200-g load, rubbed 10 times with a brass brush (manufactured by AS ONE Corporation; standard type, 4 rows, B-3014) at a rate of 60 mm/sec. When the presence of scratches were visually examined immediately after the rubbing, a resin film that repaired itself from the damage within 10 seconds after scratches were made was rated "excellent," a resin film that required more than 10 seconds but not more than 30 seconds to repair itself from the damage was rated "good," a resin film that required more than 30 seconds but not more than 1 minute to repair itself from the damage was rated "average," and a resin film that did not repair itself within 1 minute was rated "poor."

In Table 1, the column "ratio of number of moles of hydroxyl groups in polyacrylic polyol" represents the ratio (%) of the number of moles of hydroxyl groups in the polyacrylic polyol to the total number of moles of all hydroxyl groups in the polyol.

The "number of functional groups" column in the "epoxy compound" section represents the number of epoxy groups included in the relative compound. Note that "2-3" in the "number of functional groups" column represents a mixture of a bi-functional epoxy compound and a tri-functional epoxy compound.

The "epoxy compound/polyol + polyisocyanate" column in the "epoxy compound" section represents the amount (mass%) of the epoxy compound with respect to the total weight of the polyol and the polyisocyanate.

**[Table 1]**

| Table 1 | Polyol | | Epoxy compound | | | | Evaluation | |
|---|---|---|---|---|---|---|---|---|
| | Presence/ absence of polyacrylic polyol | Ratio of number of moles of hydroxyl groups in polyacrylic polyol | Type | Molecular weight | Number of functional groups | Epoxy compound/polyol + polyisocyanate | Solvent resistance | Self-healing properties |
| Example 1 | Present | 70% | EX-313 | 204 | 2-3 | 13 wt% | Excellent | Excellent |
| Example 2 | | 70% | EX-830 | 526 | 2 | 13 wt% | Good | Excellent |
| Reference Example 3 | | 70% | EX-121 | 186 | 1 | 13 wt% | Good | Excellent |
| Example 4 | | 70% | EX-313 | 204 | 2-3 | 1 wt% | Good | Good |
| Example 5 | | 50% | EX-313 | 204 | 2-3 | 13 wt% | Good | Excellent |
| Example 6 | | 100% | EX-313 | 204 | 2-3 | 13 wt% | Excellent | Excellent |
| Comparative example 1 | Absent | 0% | EX-313 | 204 | 2-3 | 12 wt% | Poor | Excellent |
| Comparative example 2 | Present | 45% | EX-313 | 204 | 2-3 | 13 wt% | Poor | Excellent |
| Comparative example 3 | | 70% | - | - | - | - | Poor | Good |

As can be seen from Table 1 above, the spectacle lenses of Examples exhibited the desired effects (solvent resistance, self-healing properties).

In particular, the comparison between Examples 1 and 2 reveals that when the molecular weight of the epoxy compound is not more than 500, solvent resistance is more excellent.

The comparison between Examples 1 and Reference example 3 reveals that when the number of functional groups in the epoxy compound is two to four, solvent resistance is more excellent.

The comparison between Examples 1 and 4 reveals that when the amount of the epoxy compound with respect to the total weight of the polyol and the polyisocyanate is more than 1 mass% but not more than 20 mass%, self-healing properties are more excellent.

The comparison between Examples 1, 5 and 6 reveals that when the ratio of the number of moles of hydroxyl groups in the polyacrylic polyol to the total number of moles of all hydroxyl groups in the polyol is not less than 60%, solvent resistance is more excellent.

### REFERENCE SIGNS LIST

10, 100 spectacle lens
12 lens base
14 resin film

## Claims

1. A spectacle lens comprising:
a lens base; and
a resin film disposed on at least one of an object side surface and an eyeball side surface of the lens base,
wherein the resin film is formed using a composition containing a polyol, a polyisocyanate and an epoxy compound,
wherein the polyol comprises a polyacrylic polyol,
wherein a ratio of the number of moles of hydroxyl groups in the polyacrylic polyol to the number of moles of all hydroxyl groups in the polyol is not less than 50%, and
wherein the number of epoxy groups in the epoxy compound is two to four.

2. The spectacle lens according to claim 1,
wherein an amount of the epoxy compound with respect to total weight of the polyol and the polyisocyanate is more than 1 mass% but not more than 20 mass%.

3. The spectacle lens according to claim 1 or 2,
wherein a molecular weight of the epoxy compound is not more than 500.

4. The spectacle lens according to any one of claims 1 to 3,
wherein the ratio of the number of moles of hydroxyl groups in the polyacrylic polyol to the number of moles of all hydroxyl groups in the polyol is not less than 60%.

5. A composition comprising a polyol, a polyisocyanate and an epoxy compound,
wherein the polyol comprises a polyacrylic polyol, and
wherein a ratio of the number of moles of hydroxyl groups in the polyacrylic polyol to the number of moles of all hydroxyl groups in the polyol is not less than 50%.

6. The composition according to claim 5,
wherein an amount of the epoxy compound with respect to total weight of the polyol and the polyisocyanate is more than 1 mass% but not more than 20 mass%.

7. The composition according to claim 5 or 6,
wherein a molecular weight of the epoxy compound is not more than 500.

8. The composition according to any one of claims 5 to 7,
wherein the number of epoxy groups in the epoxy compound is two to four.

9. The composition according to any one of claims 5 to 8,
wherein the ratio of the number of moles of hydroxyl groups in the polyacrylic polyol to the number of moles of all hydroxyl groups in the polyol is not less than 60%.

10. A spectacle lens manufacturing method comprising a step of forming a resin film by applying the composition according to any one of claims 5 to 9 onto at least one of an object side surface and an eyeball side surface of a lens base to form a coating and curing the coating.

## Patentansprüche

1. Brillenglas, umfassend:
eine Linsenbasis; und
einen Harzfilm, der auf mindestens einer von einer objektseitigen Oberfläche und einer augenseitigen Oberfläche der Linsenbasis angeordnet ist,
wobei der Harzfilm unter Verwendung einer Zusammensetzung gebildet ist, die ein Polyol, ein Polyisocyanat und eine Epoxidverbindung enthält,
wobei das Polyol ein Polyacrylpolyol umfasst,
wobei ein Verhältnis von der Molzahl der Hydroxylgruppen in dem Polyacrylpolyol zu der Molzahl aller Hydroxylgruppen in dem Polyol nicht weniger als 50% beträgt, und
wobei die Anzahl der Epoxidgruppen in der Epoxidverbindung zwei bis vier beträgt.

2. Brillenglas gemäß Anspruch 1,
wobei eine Menge der Epoxidverbindung, bezogen auf das Gesamtgewicht des Polyols und des Polyisocyanats, mehr als 1 Massen-%, aber nicht mehr als 20 Massen-% beträgt.

3. Brillenglas gemäß Anspruch 1 oder 2,
wobei ein Molekulargewicht der Epoxidverbindung nicht mehr als 500 beträgt.

4. Brillenglas gemäß einem der Ansprüche 1 bis 3,
wobei das Verhältnis von der Molzahl der Hydroxylgruppen in dem Polyacrylpolyol zu der Molzahl aller Hydroxylgruppen in dem Polyol nicht weniger als 60% beträgt.

5. Zusammensetzung, umfassend ein Polyol, ein Polyisocyanat und eine Epoxidverbindung,
wobei das Polyol ein Polyacrylpolyol umfasst, und
wobei ein Verhältnis von der Molzahl der Hydroxylgruppen in dem Polyacrylpolyol zu der Molzahl aller Hydroxylgruppen in dem Polyol nicht weniger als 50% beträgt.

6. Zusammensetzung gemäß Anspruch 5,
worin eine Menge der Epoxidverbindung, bezogen auf das Gesamtgewicht des Polyols und des Polyisocyanats, mehr als 1 Massen-%, aber nicht mehr als 20 Massen-% beträgt.

7. Zusammensetzung gemäß Anspruch 5 oder 6,
wobei das Molekulargewicht der Epoxidverbindung nicht mehr als 500 beträgt.

8. Zusammensetzung gemäß einem der Ansprüche 5 bis 7,
wobei die Anzahl der Epoxidgruppen in der Epoxidverbindung zwei bis vier beträgt.

9. Zusammensetzung gemäß einem der Ansprüche 5 bis 8,
wobei das Verhältnis von der Molzahl der Hydroxylgruppen in dem Polyacrylpolyol zu der Molzahl aller Hydroxylgruppen in dem Polyol nicht weniger als 60% beträgt.

10. Verfahren zur Herstellung eines Brillenglases, umfassend einen Schritt des Bildens eines Harzfilms durch Auftragen der Zusammensetzung gemäß einem der Ansprüche 5 bis 9 auf mindestens eine von einer objektseitigen Oberfläche und einer augenseitigen Oberfläche einer Linsenbasis, um eine Beschichtung zu bilden, und das Härten der Beschichtung.

## Revendications

1. Verre de lunettes comprenant :
une base de verre ; et
un film de résine déposé sur au moins une d'une surface côté objet et une surface côté globe oculaire de la base de verre,
dans lequel le film de résine est formé à l'aide d'une composition contenant un polyol, un polyisocyanate et un composé epoxy,
dans lequel le polyol comprend un polyol polyacrylique,
dans lequel un ratio du nombre de moles de groupes hydroxyles dans le polyol polyacrylique sur le nombre de moles de tous les groupes hydroxyles dans le polyol n'est pas moins de 50%, et
dans lequel le nombre de groupes époxy dans le composé époxy est de deux à quatre.

2. Verre de lunettes selon la revendication 1,
dans lequel une quantité du composé époxy par rapport au poids total du polyol et du polyisocyanate est de plus de 1% en masse mais de pas plus de 20% en masse,

3. Verre de lunettes selon la revendication 1 ou la revendication 2,
dans lequel un poids moléculaire du composé époxy est de pas plus de 500.

4. Verre de lunettes selon l'une quelconque des revendications 1 à 3,
dans lequel le ratio du nombre de moles de groupes hydroxyles dans le polyol polyacrylique sur le nombre de moles de tous les groupes hydroxyles dans le polyol n'est pas moins de 60%,

5. Composition comprenant un polyol, un polyisocyanate et un composé époxy,
dans laquelle le polyol comprend un polyol polyacrylique, et
dans laquelle un ratio du nombre de moles des groupes hydroxyles dans le polyol polyacrylique sur le nombre de moles de tous les groupes hydroxyles dans le polyol n'est pas moins de 50%.

6. Composition selon la revendication 5,
dans laquelle une quantité du composé époxy par rapport au poids total du polyol et du polyisocyanate est de plus de 1% en masse mais de pas plus de 20% en masse,

7. Composition selon la revendication 5 ou la revendication 6,
dans laquelle un poids moléculaire du composé époxy est de pas plus de 500.

8. Composition selon l'une quelconque des revendications 5 à 7,
dans laquelle le nombre de groupes époxy dans le composé époxy est de deux à quatre,

9. Composition selon l'une quelconque des revendications 5 à 8,
dans laquelle le ratio du nombre de moles de groupes hydroxyles dans le polyol polyacrylique sur le nombre de moles de tous les groupes hydroxyles dans le polyol n'est pas moins de 60%,

10. Procédé de production d'un verre de lunettes comprenant une étape consistant à former un film de résine en appliquant la composition selon l'une quelconque des revendications 5 à 9 sur au moins une d'une surface côté objet et d'une surface côté globe oculaire d'une base de verre pour former un revêtement et durcir le revêtement.
